(19) **Europäisches Patentamt**

**European Patent Office**

**Office européen des brevets**

(11) **EP 1 588 943 A2**

(12) **EUROPEAN PATENT APPLICATION**

(43) Date of publication:
26.10.2005 Bulletin 2005/43

(51) Int Cl.⁷: **B64G 1/22**, H04Q 11/00, H02G 3/00

(21) Application number: 05251192.0

(22) Date of filing: 28.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.04.2004 US 828276**

(71) Applicant: **COM DEV LTD.**
**Cambridge, Ontario N1R 7H5 (CA)**

(72) Inventors:
• **Blakeney, Ross S.**
**Cambridge, Ontario N3H 3KS (CA)**
• **Wiesel, Jeffrey M.**
**Cambridge, Ontario N1R 5S4 (CA)**

(74) Representative:
**Lloyd, Patrick Alexander Desmond**
**Reddie & Grose**
**16 Theobalds Road**
**London WC1X 8PL (GB)**

(54) **Distributed matrix wiring assembly**

(57)   A distributed matrix wiring assembly (10) uses a distributed matrix module (14) to connect a routing relay module to a payload equipment device (20) over a set of harness wires. The routing relay module is adapted to provide driving signals to the harness wires at a first end. The distributed matrix module (14) is connected to the harness wires at a second end as well as to the payload equipment device (20). The distributed matrix includes distributed matrix column wires and distributed matrix row wires which are configured to form a distributed matrix having distributed matrix nodes, each distributed matrix node being defined by the unique combination of a distributed matrix column wire and a distributed matrix row wire. Since the distributed matrix nodes form at least a portion of the overall matrix node requirement it is possible to reduce the number of harness wires required.

FIG. 2

**Description**

**FIELD OF THE INVENTION**

This invention relates to harness wiring for satellite equipment and more particularly to a distributed matrix wiring assembly for satellite payload equipment.

**BACKGROUND OF THE INVENTION**

Satellite payload equipment command and telemetry signals are typically generated by a command module and transmitted to the payload equipment through a wire harness. The wire harness is typically connected to the command module through a routing matrix. A routing matrix consists of an arrangement of routing relays configured to independently connect individual rows and columns to the command module. Each unique combination of one row and one column is designated as a node, the number of nodes in the matrix being equal to the product of the number of rows and columns. Typically, a routing matrix is physically located at or near the command module. Each node in the routing matrix is connected to the satellite payload equipment via two harness wires in a payload equipment-to-command module wire harness. Specifically, command and telemetry routing matrix nodes are used to route command and telemetry signals between a command module and associated satellite payload equipment. This means that satellite payload equipment that is controlled by 100 matrix nodes of a command module would require a wire harness having 200 harness wires in order to connect to the command module. Wire harnesses and associated support fasteners make a significant contribution to the mass of a satellite.

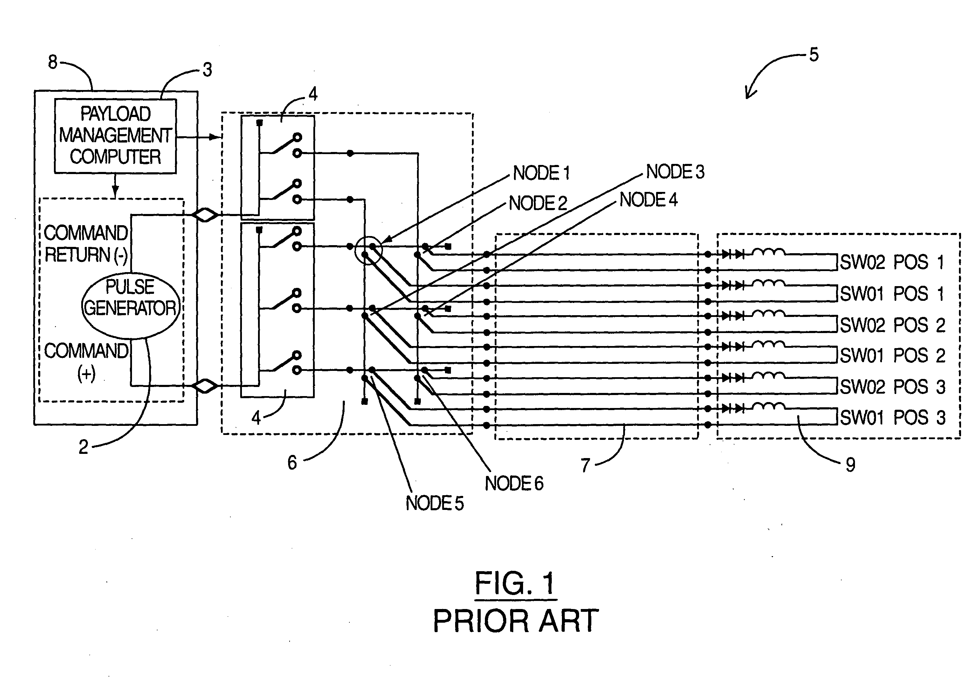

FIG. 1 is a schematic diagram that illustrates a traditional matrix wiring assembly **5** for a satellite payload equipment device **9** that uses 6 matrix nodes. Since equipment device **9** uses 6 matrix nodes, it requires a wire harness **7** that contains 12 harness wires to connect it to a command module **8** as shown though routing matrix **6.** A payload management computer **3** is coupled to both pulse generator **2** and routing matrix **6.** Routing matrix **6** contains row and column routing relays **4** that selectively connect pulse generator **2** to circuitry within payload equipment device **9** via **node1** through **node6** (FIG. 1). As noted above, the number of nodes in routing matrix **6** equals the product of the number of rows and columns associated with routing matrix **6.** That is, since two wires are required for each routing matrix node, wire harness **7** will need to contain 12 harness wires in order to connect command module **8** to satellite payload equipment device **9.** Attempts have been made to reduce the number of harness wires within wire harness **7** that are required to connect command module **8** to satellite payload equipment device **9.**

For example, U.S. Patent No. 5,961,076 to Eller et al., and U.S. Patent No. 5,938,703 to Zwang each disclose modular spacecraft equipment for reducing the number of wire harness connections between a command module and payload equipment. In particular, Eller et al. teaches the use of reusable independent payload modules, while Zwang teaches a method for controlling devices in response to serial digital command signals through the use of embedded command modules. However, these approaches increase the complexity and cost of the payload equipment modules while potentially reducing reliability.

Also, U.S. Patent Application No. 2003/0113121 to Gayrard et al. and Japanese Patent No. 01261934 to Masahito disclose the use of specialized transmission equipment to reduce the number of wire links in the wire harness. In particular, Gayrard teaches the use of infrared transmission links and Masahito teaches the use of laser beam transmission links. Again, these approaches increase the complexity and cost of the payload equipment modules while potentially reducing reliability.

**SUMMARY OF THE INVENTION**

The invention provides in one aspect, a distributed matrix wiring assembly for connecting a routing relay module to a payload equipment device over a first set of harness wires having first and second ends, said routing relay module being adapted to provide a plurality of driving signals to said set of harness wires at the first end, said payload equipment device having an overall matrix node requirement, said assembly comprising:

(a) a distributed matrix module coupled to said first set of harness wires at the second end and coupled to said payload equipment device, said distributed matrix module including:

(i) at least one distributed matrix column wire;
(ii) at least one distributed matrix row wire;
(iii) said distributed matrix column and row wires being configured to form a distributed matrix having distributed matrix nodes, each distributed matrix node being defined by the unique combination of a distributed matrix column wire and a distributed matrix row wire;

(b) such that the distributed matrix nodes form at least a portion of the overall matrix node requirement.

Further aspects and advantages of the invention will appear from the following description taken together with the accompanying drawings.

## BRIEF DESCRIPTION OF THE DRAWINGS

For a better understanding of the present invention, and to show more clearly how it may be carried into effect, reference will now be made, by way of example, to the accompanying drawings which show some examples of the present invention, and in which:

FIG. 1 is a schematic diagram of a conventional prior art wiring matrix utilized to connect a command module to satellite payload equipment;

FIG. 2 is a block diagram of an example distributed matrix wiring assembly of the present invention for connecting a command module to one payload equipment device;

FIG. 3A is a schematic diagram of an example distributed matrix wiring assembly of the present invention where the distributed matrix module is integrated within the payload equipment device;

FIG. 3B is a schematic diagram of an example distributed matrix wiring assembly of the present invention where the distributed matrix module is a separate module;

FIG. 4 is a schematic diagram of another example payload equipment device with eight three position switches that are integrated within distributed routing matrix of the present invention;

FIG. 5 is a block diagram of another example distributed matrix wiring assembly of the present invention for connecting multiple payload equipment devices;

FIG. 6 is a block diagram of another example partially distributed matrix wiring assembly of the present invention;

FIG. 7 is a block diagram of another example hybrid traditional-distributed matrix wiring assembly of the present invention;

FIGS. 8A and 8B are block diagrams of another example distributed matrix wiring assembly of the present invention for connecting two or more payload equipment devices to a single distributed matrix;

FIG. 9 is a block diagram of an example distributed matrix assembly adaptor of the present invention for adapting to payload equipment devices that use traditional wire harnesses; and

FIG. 10 is a schematic diagram of another example distributed matrix wiring assembly of the present invention where the distributed matrix module is three dimensional.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF THE INVENTION

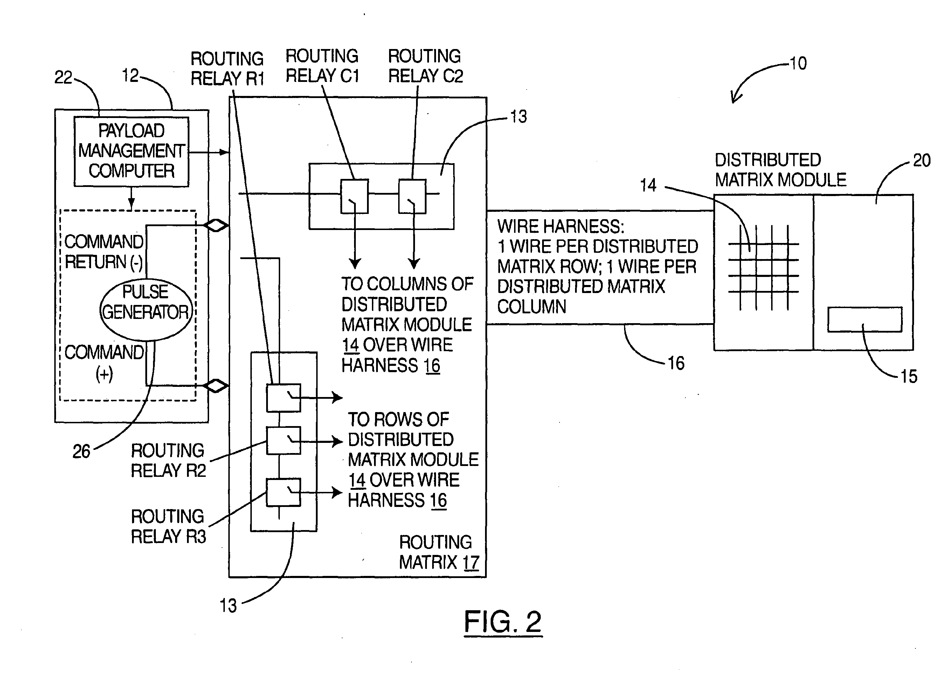

FIG. 2 illustrates a distributed matrix wiring assembly **10** built in accordance with the present invention. Distributed matrix wiring assembly **10** is used to route command, remote management, control and telemetry signals between command module **12** and payload equipment device **20** through wire harness **16** using routing relays **13** within routing matrix **17** which provide signals to a distributed matrix module **14**. The distributed matrix module **14** in is turn coupled to the circuitry of a payload equipment device **20**. As will be described, distributed matrix wiring assembly **10** in effect shifts over at least some of the matrix wiring nodes that would conventionally be located within the routing matrix **17**. Doing so, significantly reduces the number of harness wires required within wire harness **16** as will be described. To provide maximum benefit, the distributed matrix module **14** is located as close as possible to payload equipment device **20.**

As will be described, distributed matrix assembly **10** allows payload equipment device **20** (e.g. a 6 node device) to be controlled through a wire harness **16** with fewer wires (e.g. 5 harness wires) than the conventional case (FIG. 1). This is because in the example given, 3 row harness wires and 2 column harness wires located at the payload equipment device **20** will form the required 3x2 harness wire matrix having 6 nodes. Implementation of distributed matrix wiring assembly **10** does not require changes to command module **12** or the installation of additional switches or electronic components within payload equipment device **20**. The row and column harness wires are connected as required to the circuitry of equipment device **20**.

Payload equipment device **20** is a typical satellite payload device that contains payload circuitry **15** which is activated by command signals, generating telemetry signals or indicating status (e.g. RF switch assemblies, telemetry assemblies, power relays, etc.) and that receives control signals through the harness wires of wire harness **16**. The harness wires of wire harness **16** are preferably categorized as either column or row matrix wires and provided to payload circuitry **15** of payload equipment device **20** in a one-to-one manner. However, it should be understood that other types of matrix wires could be utilized as well. Depending on the configuration of the payload equipment device **20,** wire connections between wire harness **16** and payload equipment device **20** could be made via wire junctions or circuit board traces.

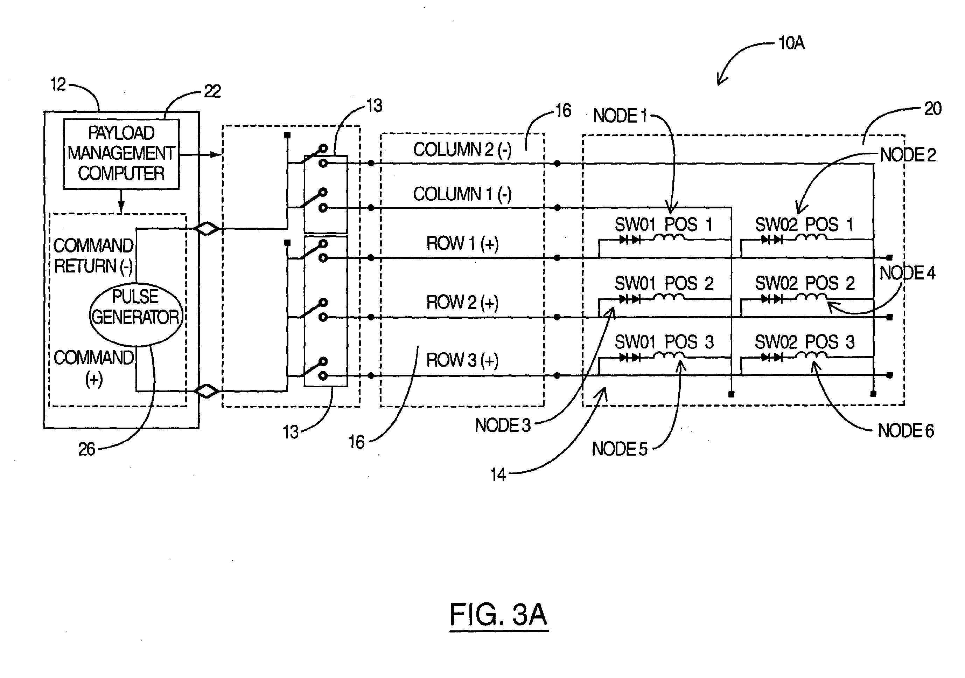

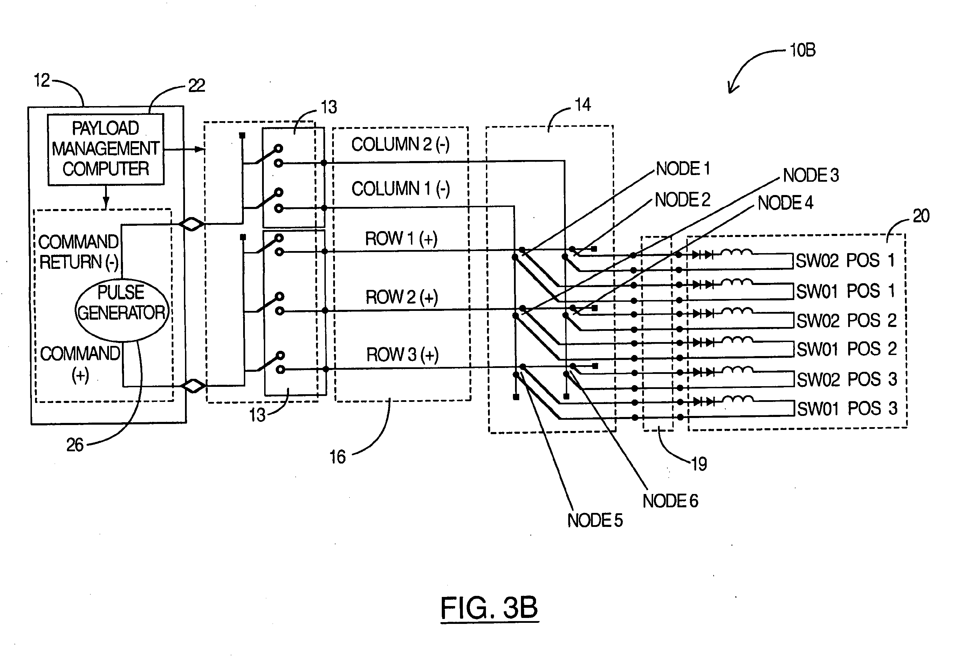

Distributed matrix **14** is either integrated into the circuitry of payload equipment device **20** (FIG. 3A) or a separate module (see FIG. 3B). In either case, distributed matrix **14** comprises a number of distributed nodes that are formed by the unique combination of distributed column and row wires. It should be understood that while many of the example implementations of distributed matrix assembly **10** only include distributed matrix column and row wires, additional types of distributed matrix wires could be utilized to form the distributed matrix nodes.

Routing relays **13** of routing matrix **17** are used to drive the matrix row and column wires of distributed matrix module **14** at the other end of wire harness **16** as shown in FIG. 2. As shown, there are no traditional matrix node connections within routing matrix **17** and all of the matrix row and column nodes are distributed to the distributed matrix module **14**. Routing relays **13** are preferably FET-based but it should be understood that various kinds of electronic switching elements could be used.

Command module **12** provides command and control functions for payload equipment device **20**. Generally, and as conventionally known, command module **12** is utilized to generate and/or receive signals using a power source (not shown) and a pulse generator **26** and to connect them to the appropriate matrix rows and columns via activation of routing relays **13**. It should be understood that command module **12** could be any device that generates and/or receives signals and that may have a different configuration than the version shown in FIG. 2.

Payload management computer **22** is typically implemented using conventional computing processors and memory chips. Power supply (not shown) and pulse generator **26** are also well known conventional components. Management computer **22** generates command and control signals for transmission to payload equipment device **20** and sends them to routing relays **13**. Management computer **22** simultaneously actuates routing relays **13** such that command and control signals are selectively routed through routing relays **13** for transmission over wire harness **16**. Payload management computer **22** could be implemented using any circuitry (FPGA for example) capable of carrying out the above functions based on internally (i.e. embedded software) or externally (i.e. ground station or separate onboard device) generated commands. That is, it should be understood that payload management computer **22** does not need to be a computer. Also, it should be understood that pulse generator **26** could be replaced by any signal generating or receiving device.

As will be described further, the use of distributed matrix assembly **10** ensures that at least a portion of the nodes of the overall wiring matrix associated with distributed matrix wiring assembly **10** are located within distributed matrix module **14**. This approach significantly reduces the number of harness wires required within wire harness **16** to connect command module **12** to payload equipment device **20**.

Referring now to FIG. 3A, a more detailed schematic view of a preferred example implementation of distributed matrix assembly **10A** is shown. Specifically, distributed matrix **14** is integrated within the circuit connections of payload equipment device **20**. The example payload equipment device **20** contains two (2) 3-position switches that are directly connected to wire harness **16**. As shown, column1, column2, row1, row2 and row3 harness wires of wire harness **16** are provided directly to the relevant positions of switches SW01 and SW02 within payload equipment device **20**. The wires in wire harness **16** equal the number of column and row wires (5 in this example).

Referring now to FIG. 3B, a detailed schematic view of another example implementation of distributed matrix assembly **10B** is shown. Specifically, distributed matrix module **14** is utilized as separate module (or as a harness adapter) that is then directly connected to payload equipment device **20**. Again the example payload equipment device **20** contains two (2) 3-position switches that are in this case are connected to distributed matrix module **14**. Column1, column2, row1, row2 and row3 harness wires of wire harness **16** are provided to distributed matrix module **14**.

The column and row harness wires are then configured within distributed matrix module **14** to form a distributed matrix having distributed matrix nodes. Each distributed node is defined by the unique combination of a distributed matrix column wire and a distributed matrix row wire. The wires in wire harness **16** equal the number of column and row wires (5 in the example shown in FIG. 3B). Finally, matrix module **14** is connected to payload equipment device **20** through a set of wires **19** that contains a number of wires that is double the number of nodes within distributed matrix module **14** (i.e. the usual 2 wires per matrix previously required within wire harness **16**).

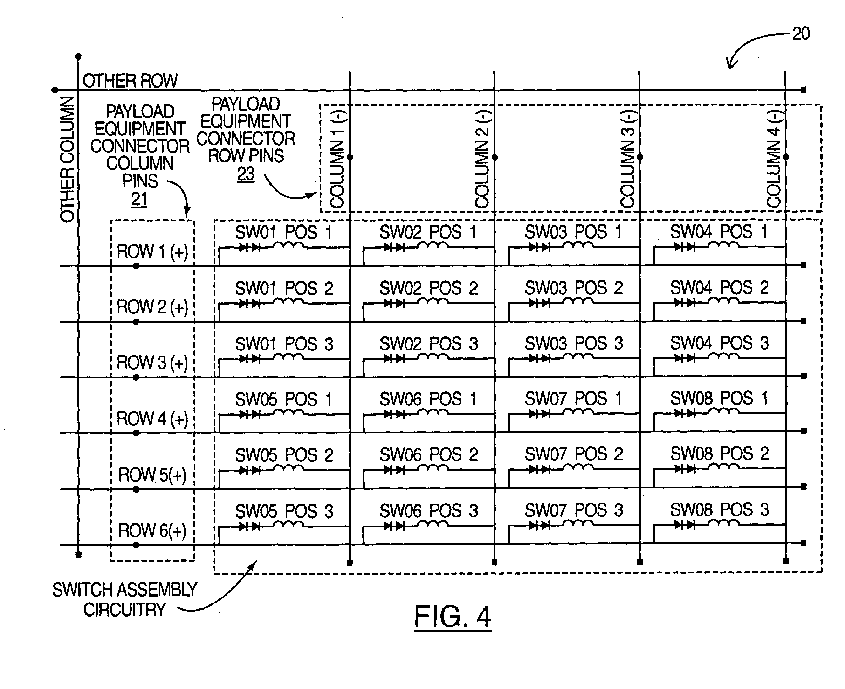

FIG. 4 is a schematic wiring diagram of an example distributed matrix module **14** that is integrated within payload equipment device **20** having eight 3-position electromechanical RF switches SW01 to SW08. As conventionally known, each switch SW01 to SW08 is capable of being in one of three positions, namely Pos1, Pos2, or Pos3.

Specifically, distributed matrix module **14** consists of six row harness wires (Row1(+) to Row6(+)) and the four column harness wires (Column1(-) to Column4(-)) which are adapted to connect to the payload equipment connector row pins **21** and the payload equipment connector row pins **23,** respectively. It should be understood that the diodes illustrated in FIG. 4 are also required in the traditional matrix assembly **5** within the routing matrix module **6** (FIG. 1). Table 1 provides an illustrative comparison between the wire harness requirements of traditional matrix assembly **5** and the wire harness requirements of distributed matrix wiring assembly **10.**

TABLE 1 -

| Wire Harness Comparison | | | | | |
|---|---|---|---|---|---|
| ASSEMBLY | Distributed Matrix | | Conventional Matrix | | Wire Reduction |
| | Wires | Configuration | Wires | Configuration | |
| Two (2) 3-Position Switches | 5 | 3x2 Matrix | 12 | 6 Nodes | 58% |
| Four (4) 3-Position Switches | 7 | 3x4 Matrix | 24 | 12 Nodes | 71% |
| Six (6) 3-Position Switches | 9 | 3x6 Matrix | 36 | 18 Nodes | 75% |
| Eight (8) 3-Position Switches | 10 | 4x6 Matrix | 48 | 24 Nodes | 79% |
| Sixty (60) 3-Position Switches | 27 | 12×15 Matrix | 360 | 180 Nodes | 93% |

As can be seen, significant reductions in the number of harness wires required can be achieved by distributed matrix assembly **10.** More generally, it can be seen that the number of wires required within the wire harness **7** within traditional matrix assembly **5** where the wiring matrix is not distributed is:

$$N = 2 \times R \times C$$

where N is the number of harness wires, R is the number of rows and C is the number of columns. In contrast, the number of wires required within the wire harness **16** within distributed matrix assembly **10** where the wiring matrix is distributed to payload equipment device **20** is:

$$N = R + C$$

Accordingly, the reduction in the number of harness wires needed is directly proportional to the number of matrix nodes being located within distributed matrix module **14.** The specific percentage reduction in the number of harness wires when utilizing distributed matrix assembly **10,** is:

$$\text{Reduction (\%)} = 100 \times (1 - ((R + C) / (2 \times R \times C)))$$

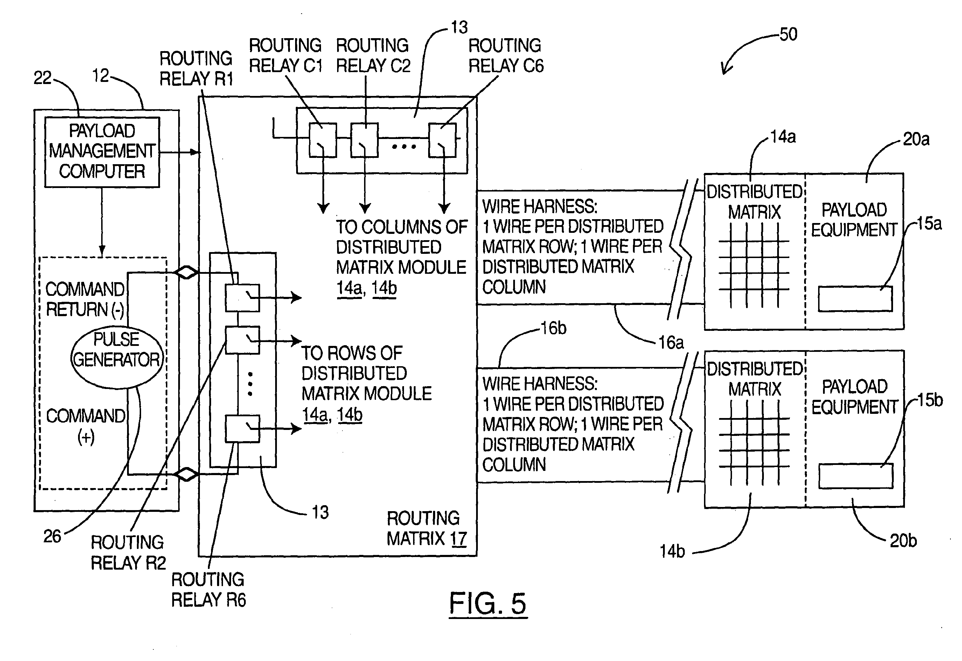

Distributed matrix wiring assembly **10** can be implemented in various configurations as will be described in relation to FIGS. 5 to 9. It should be understood that variations of distributed matrix wiring assembly **10** discussed below could be used individually or in combination to achieve optimized system design for particular controller and payload equipment operational specifications.

FIG. 5 is a block diagram of another example distributed routing matrix assembly **50** of the present invention for connecting command module **12** to multiple payload equipment devices **20a** and **20b.** Payload equipment devices **20a** and **20b** are controlled over wire harnesses **16a** and **16b** by routing relays **13** of routing matrix **17.** The nodes of distributed matrix modules **14a** and **14b** are connected to the circuitry **15a** and **15b** of payload equipment devices **20a** and **20b.** Distributed routing matrix assembly **50** operates in a similar manner to distributed routing matrix wiring assembly **10** since it is also of a "fully distributed" configuration.

It should be understood that payload equipment device **20a** may operate on harness wire rows 1-2 and harness wire columns 1-8 while payload equipment device **20b** operates on harness wire rows 1-2 and harness wire columns 9-16. Alternatively, they could also operate on separate rows and columns of wire harness **16.** It is also possible in other implementations for two or more devices to operate in parallel from the same harness wire rows and columns.

The difference between distributed routing matrix assembly **50** and distributed routing matrix wiring assembly **10** is that two separate wire harnesses **16a** and **16b** are used to transmit the command and control signals from command module **12** to two separate payload equipment devices **20a** and **20b,** respectively. As shown in FIG. 5, each wire harness **16a** and **16b** contain only one wire per distributed matrix row and 1 wire per distributed matrix column. This approach can be generalized to any number of wire harness **16,** distributed matrix modules **14** and payload equipment devices **20.** It should be understood that wire harnesses **16a** and **16b** do not need to be physically separate.

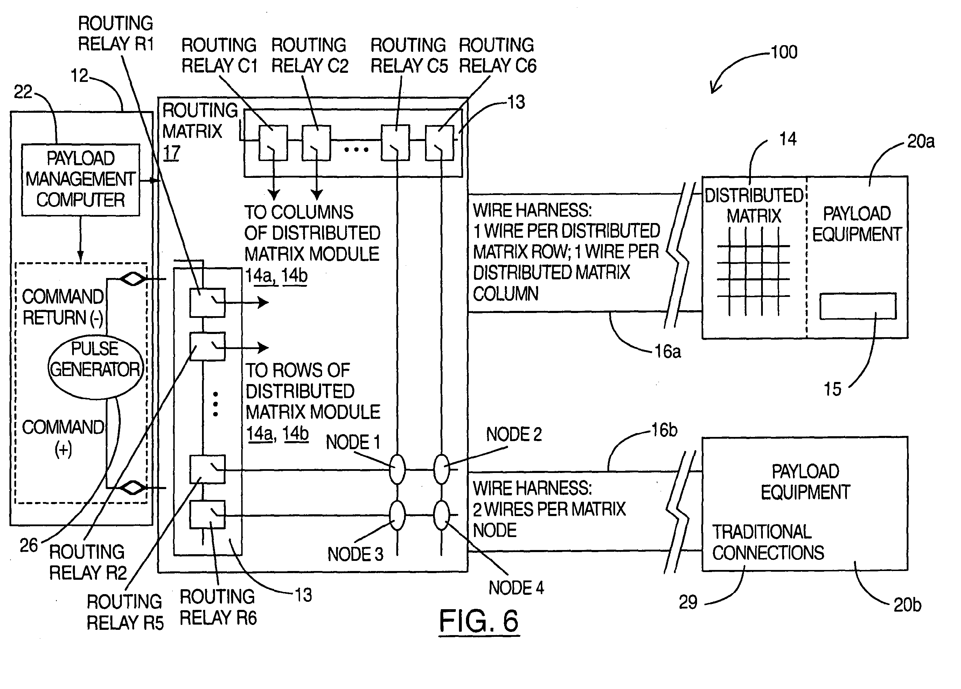

FIG. 6 is a block diagram of an example of a partially traditional-distributed routing matrix assembly **100** of the present invention. Distributed routing matrix assembly **100** is "partially distributed" due to a mixture of traditional matrix node connections and distributed matrix connections. That is, distributed routing matrix assembly **100** distributes only part of the overall matrix node connections to the distributed matrix module **14** (e.g. only 3 columns and 6 rows of a 20 x 20 matrix). This configuration allows for the connection of command module **12** to a payload equipment device **20a** that is associated with a distributed matrix module **14** and a payload equipment device **20b** that is not associated with a distributed matrix module **14** (i.e. an non-upgraded payload equipment device).

As shown, payload equipment devices **20a** and **20b** are controlled by command module **12** over wire harnesses **16a** and **16b,** respectively. However, while wire harness **16a** is a one wire per distributed matrix row and column wire type wire harness, wire harness **16b** is a traditional-style wire harness with the usual two wires per matrix node. Command module **12** uses routing relays **13** to drive the matrix row and column wires of distributed matrix module **14** at the other end of wire harness **16.** The nodes of distributed matrix module **14** are then connected to circuitry **15** of payload equipment device **20.**

Routing matrix **17** is also used in the conventional way to provide command and control signals to payload equipment device **20b** through traditional connections **29** over traditional wire harness **16b.** Specifically, as shown nodes **node1** to **node4** are utilized within routing matrix **17** to drive the wires in wire harness **16b.** It should be understood that in this configuration it is possible to accommodate any number of distributed payload devices **20a** and traditional payload devices **20b** using this approach.

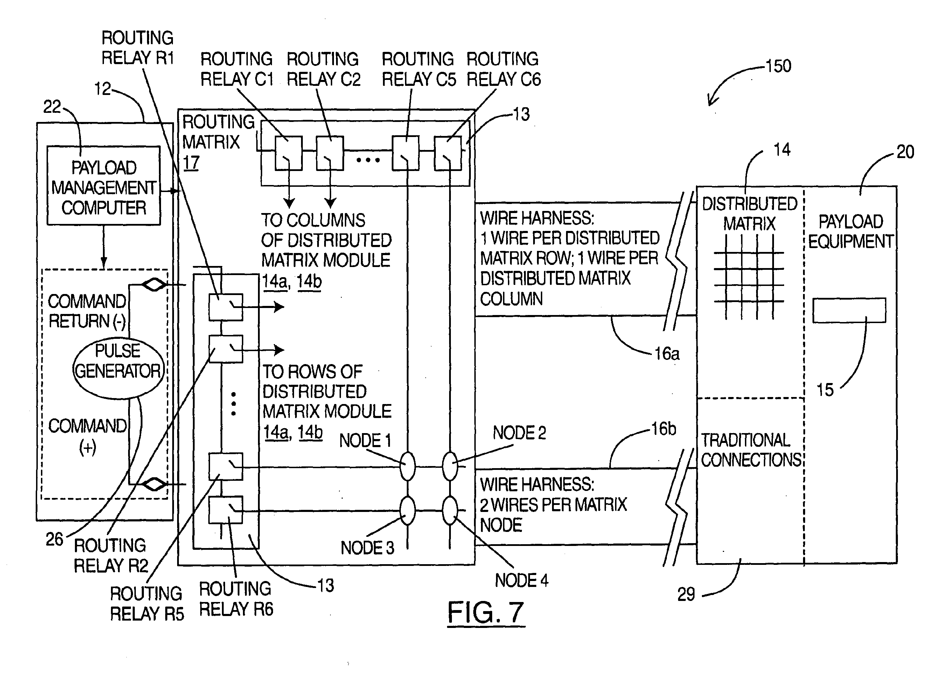

FIG. 7 is a block diagram of another example hybrid traditional-distributed routing matrix assembly **150** of the present invention that is adapted to accommodate a single hybrid payload equipment device **20** using a mixture of traditional and distributed matrix connections.

As shown, hybrid payload equipment device **20** is controlled by command module **12** over wire harnesses **16a** and **16b,** respectively. Wire harness **16a** is a one wire per distributed matrix row and column wire type wire harness and wire harness **16b** is a traditional-style wire harness with the usual two wires per matrix node. In addition, command module **12** uses routing relays **13** to drive the matrix row and column wires of distributed matrix module **14** at the other end of wire harness **16a.** The nodes of distributed matrix module **14** are then connected to circuitry **15** of payload equipment device **20.**

Command module **12** is used in the conventional way to provide command and control signals to payload equipment device **20b** through traditional connections **29** over traditional wire harness **16b.** Specifically, as shown nodes **node1** to **node4** are utilized within routing matrix **17** to drive the wires in wire harness **16b.** It should be understood that this configuration can be used to accommodate any number of such hybrid payload devices **20.**

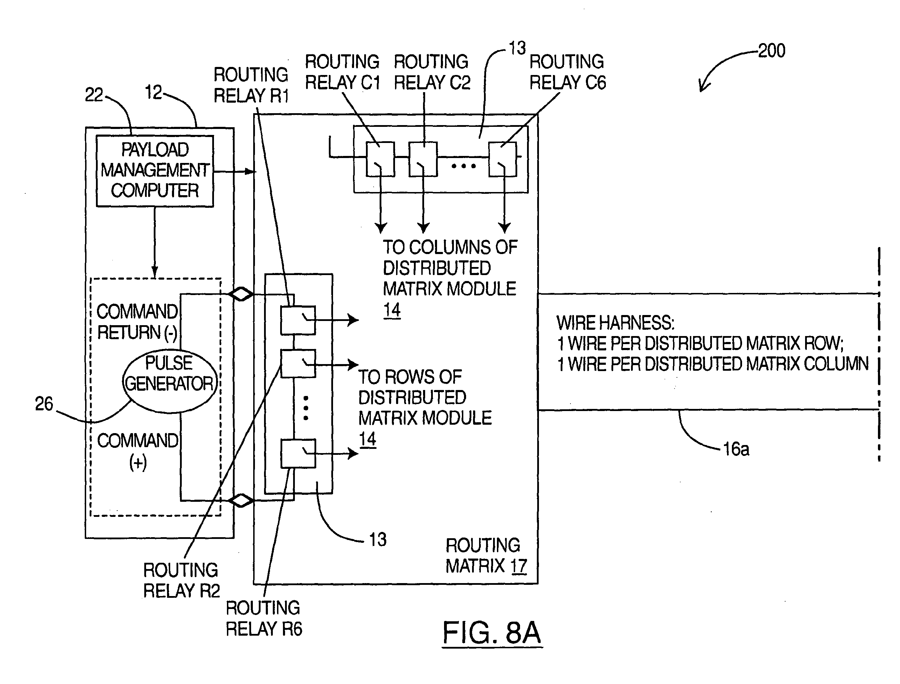

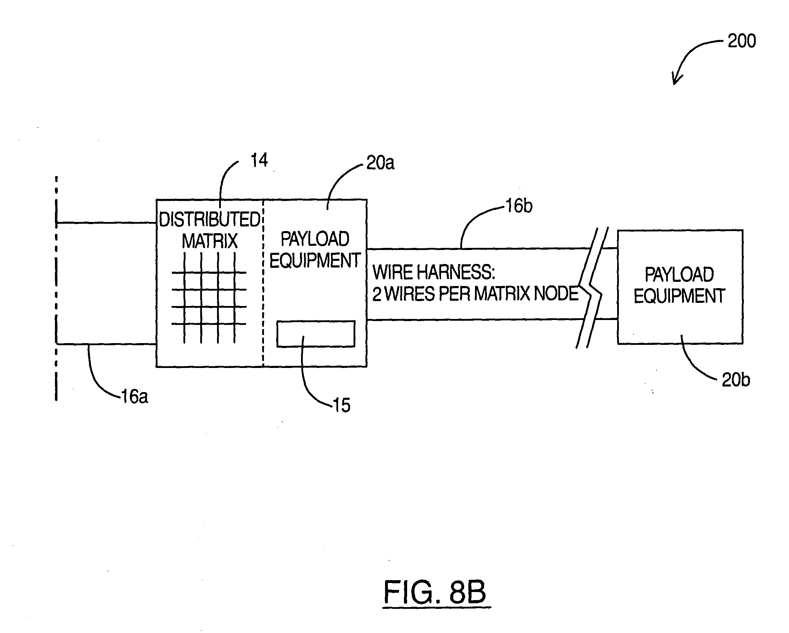

FIGS. 8A and 8B are block diagrams illustrating another example distributed routing matrix assembly **200** of the present invention that can be used to connect two or more payload equipment devices **20a** and **20b** to command module **12** using a single distributed matrix module **14.**

In this configuration, a single distributed matrix module **14** is associated with payload equipment device **20a** in order to reduce the number of harness wires within wire harness **16a** from command module **12.** Wire harness **16a** is a one wire per distributed matrix row and column wire type wire harness **16a,** wire harness **16b** is a traditional-style wire harness with the usual two wires per matrix node. Command module **12** uses routing relays **13** within routing matrix **17** to drive the matrix row and column wires of distributed matrix module **14** at the other end of wire harness **16a.**

The nodes of distributed matrix module **14** are connected to circuitry **15** of payload equipment device **20a.** Then distributed matrix module **14** associated with payload equipment device **20a** passes command and control signals that it has received from command module **12** to payload equipment device **20b** through traditional connections **29** over traditional wire harness **16b.** It should be understood that this configuration can be used to accommodate any number of "piggybacked" payload equipment devices **20b.**

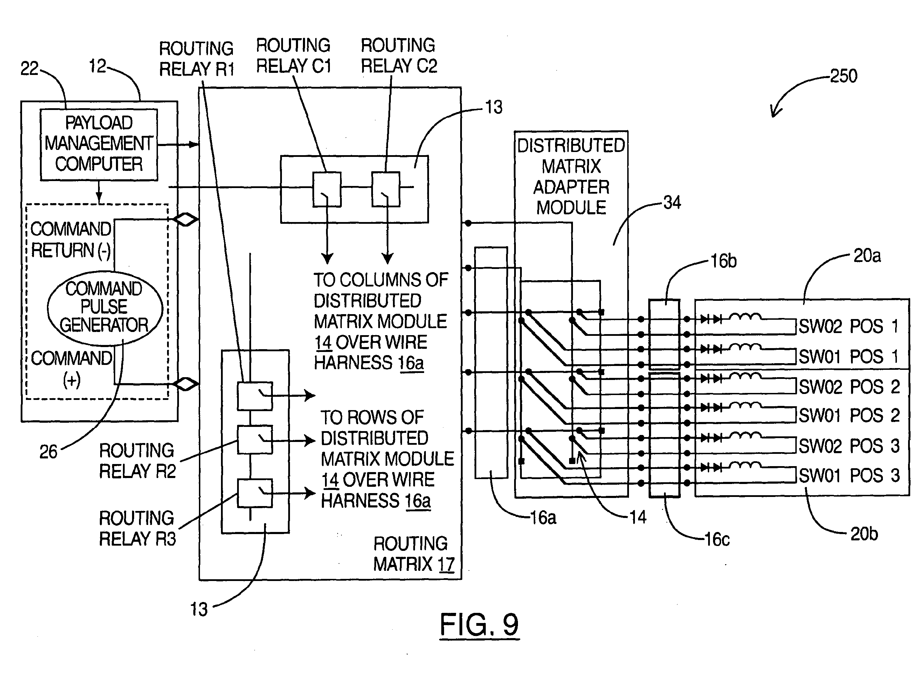

FIG. 9 is a block diagram of an example distributed routing matrix assembly adaptor **250** of the present invention that is used to provide retrofitting functionality in the case where it is desired to interface with traditional payload equipment devices. This arrangement provides for a retrofitting solution when it is not possible to easily attach or integrate the distributed matrix module **14** within a traditional payload equipment **20** as discussed above.

In this configuration, a single distributed matrix adapter module **34** is coupled to command module **12** through a one-wire per distributed matrix rows/column wire harness **16a** in order to reduce the number of harness wires required. The distributed matrix row and column wires of distributed matrix **14** within adapter module **34** are driven by routing relays **13.** Adapter module **34** is then coupled through a traditional wire harnesses **16b** and **16c** which each consist of two-wires per distributed matrix node (i.e. of distributed matrix module **14**). Payload equipment **20a** and **20b** receive command and control signals over traditional wire harnesses **16b** and **16c** directly from the distributed matrix nodes within distributed matrix module **14.** It should be understood that this configuration can be used to accommodate any number of retrofitted payload equipment devices **20a, 20b.** For maximum benefit, adapter module **34** is located in close proximity to payload equipment **20a** and **20b,** that is wire harness **16a** is much longer than wire harness **16b** or **16c.**

Distributed matrix wiring assembly **10** can be used for any system in which a switching matrix can be used to connect one device to another device. The primary application for the distributed routing matrix is for the distribution of command and telemetry signals from a satellite command module to remote payload equipment. Other possible applications include: distributed routing matrices for analog, digital, or radio frequency signal connections, distributing all of the rows and columns of a routing matrix to a device, distributing a portion of a routing matrix (i.e. 2 columns and 6 rows of a 20x20 routing matrix) to a device, a mixture or distributed and conventional routing matrix connections to a device, connecting two or more devices to a single distributed routing matrix, distributed routing matrix wire harness adapters, distributed routing matrices with more than two matrix dimensions, distributed routing matrices for non-satellite applications and distributed routing matrices where common electronics, wires or other electronics are consolidated.

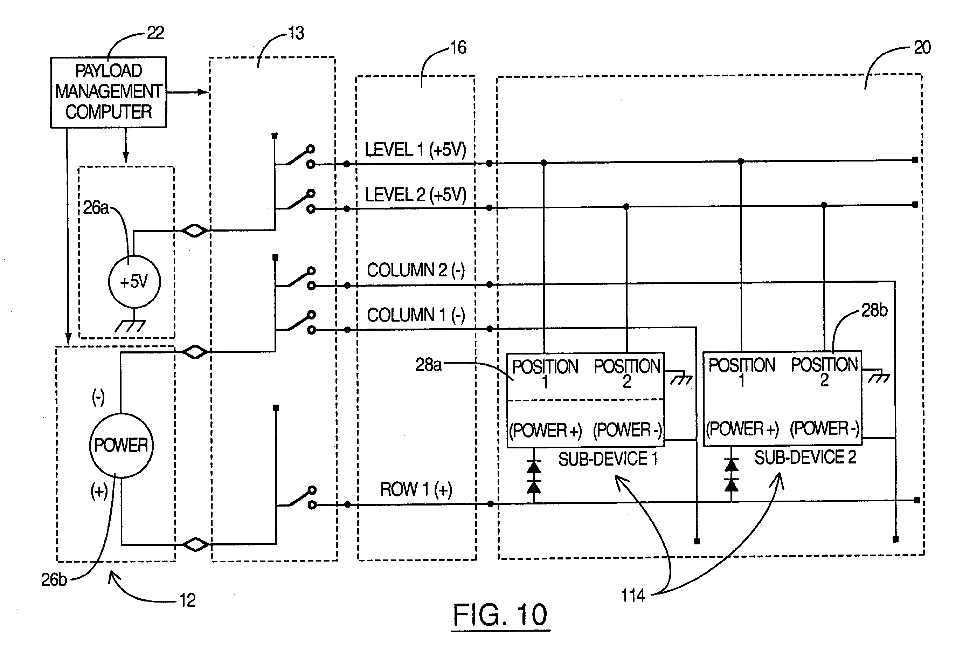

FIG. 10 is a schematic diagram of a three dimensional matrix configuration implementation of distributed matrix wiring assembly **10.** As shown, payload equipment device **20** contains sub-devices **28a** and **28b** that are powered by the row and column matrix connections. The positions of the sub-devices **28a** and **28b** are selected via logic signals transmitted over connections on the third dimension (i.e. the Level 1 and Level 2 wires shown) of distributed matrix **114.** As before, management computer **22** is coupled to routing relays **13** and pulse generators **26a** and **26b.** It should be understood that the distributed nodes of the distributed matrix **114** is defined by a unique combination of a distributed matrix column wire, a distributed matrix row wire and a distributed matrix level wire. Similarly, it should be understood that routing matrices with more than three dimensions are also contemplated and the same concepts and implementation issues discussed above would apply.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

**Claims**

1. A distributed matrix wiring assembly for connecting a routing relay module to a payload equipment device over a first set of harness wires having first and second ends, said routing relay module being adapted to provide a plurality of driving signals to said set of harness wires at the first end, said payload equipment device having an overall matrix node requirement, said assembly comprising:

   (a) a distributed matrix module coupled to said first set of harness wires at the second end and coupled to said payload equipment device, said distributed matrix module including:

   (i) at least one distributed matrix column wire;
   (ii) at least one distributed matrix row wire;
   (iii) said distributed matrix column and row wires being configured to form a distributed matrix having distributed matrix nodes, each distributed matrix node being defined by the unique combination of a distributed matrix column wire and a distributed matrix row wire;

   (b) such that the distributed matrix nodes form at least a portion of the overall matrix node requirement.

2. The assembly of claim 1, wherein the combined number of distributed column and row matrix wires is at least three.

3. The assembly of claim 1, wherein the payload equipment device includes an element selected from the group consisting of switch, relay, actuator, sensor, indicator, a device requiring command signals, a device generating telemetry feedback.

4. The assembly of claim 1, wherein the payload equipment device includes circuitry and wherein the distributed matrix module is adapted to be integrated within the payload equipment device such that said distributed matrix column and row wires are connected at said distributed matrix nodes through said circuitry.

5. The assembly of claim 1, wherein the distributed matrix module is adapted to be separate from the payload equipment device.

6. The assembly of claim 5, wherein the distributed matrix column and row wires are coupled to the payload equipment device over a second set of harness wires.

7. The assembly of claim 1, wherein the number of distributed matrix nodes equals the overall matrix node requirement of the payload equipment device.

8. The assembly of claim 1, wherein the number of distributed matrix nodes is less than the overall matrix node requirement of the payload equipment device.

9. The assembly of claim 1, wherein the distributed matrix also contains at least one distributed matrix level wire such that each distributed matrix node is defined by the unique combination of a distributed matrix column wire, a distributed matrix row wire and a distributed matrix level wire.

## FIG. 1
## PRIOR ART

EP 1 588 943 A2

ROUTING RELAY R1 · ROUTING RELAY C1 · ROUTING RELAY C2

22 · 12

PAYLOAD MANAGEMENT COMPUTER

13 · 10

COMMAND RETURN (-)

PULSE GENERATOR

COMMAND (+)

26

ROUTING RELAY R2

ROUTING RELAY R3

TO COLUMNS OF DISTRIBUTED MATRIX MODULE 14 OVER WIRE HARNESS 16

TO ROWS OF DISTRIBUTED MATRIX MODULE 14 OVER WIRE HARNESS 16

ROUTING MATRIX 17

13

WIRE HARNESS: 1 WIRE PER DISTRIBUTED MATRIX ROW; 1 WIRE PER DISTRIBUTED MATRIX COLUMN

14

16

DISTRIBUTED MATRIX MODULE

20

15

FIG. 2

EP 1 588 943 A2

10

FIG. 3A

EP 1 588 943 A2

FIG. 3B

EP 1 588 943 A2

20

OTHER ROW

| | | COLUMN 1 (-) | COLUMN 2 (-) | COLUMN 3 (-) | COLUMN 4 (-) |
|---|---|---|---|---|---|

OTHER COLUMN

PAYLOAD EQUIPMENT CONNECTOR COLUMN PINS 21

PAYLOAD EQUIPMENT CONNECTOR ROW PINS 23

| | SW01 POS 1 | SW02 POS 1 | SW03 POS 1 | SW04 POS 1 |
| ROW 1 (+) | | | | |
| ROW 2 (+) | SW01 POS 2 | SW02 POS 2 | SW03 POS 2 | SW04 POS 2 |
| ROW 3 (+) | SW01 POS 3 | SW02 POS 3 | SW03 POS 3 | SW04 POS 3 |
| ROW 4 (+) | SW05 POS 1 | SW06 POS 1 | SW07 POS 1 | SW08 POS 1 |
| ROW 5(+) | SW05 POS 2 | SW06 POS 2 | SW07 POS 2 | SW08 POS 2 |
| ROW 6(+) | SW05 POS 3 | SW06 POS 3 | SW07 POS 3 | SW08 POS 3 |

SWITCH ASSEMBLY CIRCUITRY

FIG. 4

FIG. 5

EP 1 588 943 A2

FIG. 6

ROUTING RELAY R1

ROUTING RELAY C1   ROUTING RELAY C2   ROUTING RELAY C5   ROUTING RELAY C6

22    12

PAYLOAD MANAGEMENT COMPUTER

ROUTING MATRIX 17

13

TO COLUMNS OF DISTRIBUTED MATRIX MODULE 14a, 14b

COMMAND RETURN (-)

PULSE GENERATOR

COMMAND (+)

TO ROWS OF DISTRIBUTED MATRIX MODULE 14a, 14b

26   ROUTING RELAY R2

ROUTING RELAY R5   ROUTING RELAY R6

13

NODE 1

NODE 3

NODE 2

NODE 4

100

14   20a

DISTRIBUTED MATRIX

PAYLOAD EQUIPMENT

WIRE HARNESS: 1 WIRE PER DISTRIBUTED MATRIX ROW; 1 WIRE PER DISTRIBUTED MATRIX COLUMN

16a

15

16b

WIRE HARNESS: 2 WIRES PER MATRIX NODE

PAYLOAD EQUIPMENT

TRADITIONAL CONNECTIONS

29   20b

15

EP 1 588 943 A2

FIG. 7

ROUTING RELAY R1

ROUTING RELAY C1   ROUTING RELAY C2   ROUTING RELAY C5   ROUTING RELAY C6

150

ROUTING MATRIX 17

22   12

PAYLOAD MANAGEMENT COMPUTER

13

14   20

DISTRIBUTED MATRIX

PAYLOAD EQUIPMENT

TO COLUMNS OF DISTRIBUTED MATRIX MODULE 14a, 14b

WIRE HARNESS: 1 WIRE PER DISTRIBUTED MATRIX ROW; 1 WIRE PER DISTRIBUTED MATRIX COLUMN

COMMAND RETURN (-)

PULSE GENERATOR

TO ROWS OF DISTRIBUTED MATRIX MODULE 14a, 14b

16a

15

COMMAND (+)

NODE 1   NODE 2   16b

TRADITIONAL CONNECTIONS

26   ROUTING RELAY R2

NODE 3   WIRE HARNESS: 2 WIRES PER MATRIX NODE

ROUTING RELAY R5   ROUTING RELAY R6   13   NODE 4

29

EP 1 588 943 A2

16

FIG. 8A

EP 1 588 943 A2

FIG. 8B

FIG. 9

EP 1 588 943 A2

FIG. 10

EP 1 588 943 A2